Europäisches Patentamt

European Patent Office

Office européen des brevets

(19)

(11) Numéro de publication : **0 184 015**
**B1**

(12) **FASCICULE DE BREVET EUROPÉEN**

(45) Date de publication du fascicule du brevet :
15.06.88

(51) Int. Cl.⁴ : **A 23 L   1/20**

(21) Numéro de dépôt : **85114121.8**

(22) Date de dépôt : **06.11.85**

(54) **Purée de légumineuses.**

(30) Priorité : **28.11.84 CH 5668/84**

(43) Date de publication de la demande :
**11.06.86 Bulletin 86/24**

(45) Mention de la délivrance du brevet :
**15.06.88 Bulletin 88/24**

(84) Etats contractants désignés :
**AT BE DE FR GB IT LU NL SE**

(56) Documents cités :
**US-A- 2 475 554**
**US-A- 4 407 840**
**FOOD PRODUCT DEVELOPMENT, vol. 13, no. 7, 1979, pages 48-49; S. KON et al.: "Process development adds scope to bean products"**
**FOOD PRODUCT DEVELOPMENT, vol. 6, no. 4, juin 1972, pages 82,85; E.D. WHITE et al.: "Processes and potential markets for instant bean powders"**
**TRANSACTIONS OF THE ASAE, vol. 10, no. 2, 1967, pages 154-156; F.W. BAKKER-ARKEMA et al.: "Drying characteristics of pea beans on single and double-drum driers"**
**Le dossier contient des informations techniques présentées postérieurement au dépôt de la demande et ne figurant pas dans le présent fascicule.**

(73) Titulaire : **SOCIETE DES PRODUITS NESTLE S.A.**
**Case postale 353**
**CH-1800 Vevey (CH)**

(72) Inventeur : **Würsch, Pierre**
**Ch. de la Crausaz 64**
**CH-1814 La Tour-de-Peilz (CH)**
Inventeur : **Musso, François**
**5, rue des Argillers**
**F-25300 Pontarlier (FR)**
Inventeur : **Goulois, Eric**
**4, rue Chambiges**
**F-60000 Beauvais (FR)**

Jouve, 18, rue St-Denis, 75001 Paris, France

EP 0 184 015 B1

**0 184 015**

**Description**

La présente invention a pour objet une purée de légumineuses déshydratée instantanée et son procédé de fabrication.

Il est connu que l'ingestion de différents féculents a une influence variable sur la glycémie (teneur du sang en glucose) et sur l'insulinémie (teneur du sang en insuline), selon leur digestibilité qui est influencée notamment par leur mode de préparation et de cuisson et par la nature de leur amidon. On sait en particulier que l'amidon de graines de légumineuses peut présenter une digestibilité retardée, diététiquement utile, par rapport à l'amidon d'autre féculents tels que les céréales ou les pommes de terre p. ex. Mais on sait également que cette propriété désirable de l'amidon de graines de légumineuses peut être perdue suivant la manière dont elles sont préparées et cuites, notamment si elles sont moulues avant d'être cuites.

Il est connu par ailleurs que l'on peut fabriquer un produit structuré en préparant une purée ou pâte aqueuse de fruits, de légumes et/ou de céréales, notamment de pommes de terre, de blé ou de pois en séchant la purée sur cylindre, en détachant un film du cylindre et en empilant de nombreuses couches de ce film pour former un laminat. Cependant, ce procédé connu est centré sur la fabrication d'un laminat de pommes de terre capable de remplacer une pâte à base de farine de blé dans des spécialités culinaires telles que des lasagnes ou des rissoles p. ex.

Il est également connu de fabriquer des purées de pommes de terre ou des bouillies de céréales déshydratées instantanées sous forme de flocons par séchage sur cylindre. Cependant, cette technologie ne s'est pratiquement pas étendue au traitement des légumineuses.

Il est aussi connu de fabriquer une purée de pommes de terre déshydratée instantanée sous forme de granules par un séchage impliquant le mélange de la purée à sécher avec une quantité recyclée de purée partiellement séchée. Cependant, cette technologie ne s'est pratiquement pas étendue au traitement d'un autre féculent que la pomme de terre.

Enfin, on connaît un procédé de fabrication de graines de légumineuses déshydratées instantanées entières comprenant des opérations de trempage, cuisson, imprégnation avec un agent complexant le calcium, congélation et séchage. La propriété d'instantanéité des graines de légumineuses ainsi apprêtées semble être réellement obtenue de cette manière, mais le procédé est compliqué.

En d'autres termes, le fait que les technologies de fabrication de purées déshydratées sous forme de flocons ou de granules ne se soient pratiquement pas étendues au traitement des graines de légumineuses semble indiquer qu'elles ne sont pas adéquates pour cette application. Ceci est confirmé par le fait que les graines de légumineuses instantanées connues sont proposées sous forme entière. Et comme la propriété de digestibilité retardée de l'amidon de graines de légumineuses, utile en diététique, peut être perdue si l'on choisit un mode de préparation et de cuisson inadéquat, tout semble s'opposer à l'idée de fabriquer une purée déshydratée instantanée de graines de légumineuses.

Food Product Development 13, 7, pages 48-49 (1979) décrit un procédé de préparation d'une purée de haricots déshydratée par séchage sur cylindre à 140 °C d'une dispersion aqueuse à 25% de matière sèche obtenue par trempage des graines de haricots sèches durant 45 min dans de l'eau chauffée à la vapeur, cuisson à la vapeur durant 60 min et broyage au moulin colloïdal avec addition d'eau.

US-A-4407840 décrit un procédé de production d'une poudre de haricots devant présenter les propriétés d'un plat traditionnel mexicain après réhydratation, dans lequel des graines de haricots sèches sont trempées durant 25-45 min dans de l'eau à 88-100 °C, cuites sous pression, désintégrées par détente après la cuisson et séchées sur cylindre.

La présente invention a précisément pour but de proposer une purée déshydratée instantanée de graines de légumineuses dont l'amidon présente sensiblement la même digestibilité retardée que celui des graines entières cuites avec ménagement.

La présente invention a également pour but de proposer un procédé de fabrication simple d'une telle purée qui conserve à l'amidon sa propriété de digestibilité retardée.

La purée de légumineuses déshydratée instantanée selon la présente invention est ainsi caractérisée par le fait qu'elle présente un index de digestion inférieur à 30.

La légumineuse est choisie de préférence dans le groupe formé par les haricots et les lentilles.

La purée déshydratée instantanée peut se composer de granules ou de flocons.

Le procédé de fabrication d'une purée de légumineuses déshydratée instantanée selon la présente invention est caractérisé par le fait que l'on trempe des graines de légumineuses sèches, à une température comprise entre 20 et 65 °C durant 0,5-24 h, ont les cuit à la vapeur saturée à pression atmosphérique durant 40-60 min, on les réduit en purée en les pressant au travers d'un presse-purée et l'on sèche la purée sur cylindre.

On a constaté en effet que, de manière surprenante, une purée déshydratée instantanée peut être ainsi préparée de manière simple à partir de graines de légumineuses tout en conservant l'essentiel de la propriété de digestibilité retardée de leur amidon. On a constaté en particulier que cette propriété peut être conservée d'autant mieux que l'on réalise les étapes du procédé de manière à endommager le moins possible les parois cellulaires de la graine ou plus précisément les parois cellulaires du cotylédon.

Dans le présent exposé, la digestibilité de l'amidon est caractérisée par un « index de digestion ». On

2

détermine cet index par un test d'hydrolyse de l'amidon in vitro durant 1 h à l'aide de trypsine et de pancréatine dans des conditions précises qui sont décrites plus loin.

On a constaté en effet une corrélation étroite entre l'index de digestion ainsi déterminé et la digestibilité in vivo de l'amidon caractérisée par un « index glycémique ».

On détermine cet index glycémique par intégration d'une courbe montrant l'évolution de la glycémie, autrement dit de la teneur du sang en glucose durant la première heure suivant l'ingestion de l'amidon. Les conditions précises de l'établissement de cette courbe sont décrites plus loin.

Dans le présent exposé, l'expression « purée déshydratée instantanée » signifie que la purée est sous forme déshydratée et qu'on peut la reconstituer par simple addition d'eau à environ 80-100 °C et léger brassage.

De même, la notion de « gélatinisation de l'amidon » est à comprendre comme la perte de la biréfringence de l'amidon sous l'effet du chauffage et de l'absorption d'eau.

Enfin, l'expression « des graines de légumineuses sèches » signifie des graines de légumineuses qui ont été séchées après la récolte pour être commercialisées, ce séchage se faisant le plus souvent naturellement, à l'air. De telles graines présentent généralement une teneur en eau résiduelle de environ 8-14 % après avoir perdu environ la moitié de leur poids total initial au cours du séchage.

On a constaté donc que le présent procédé permet d'atteindre un objectif apparemment paradoxal, à savoir la fabrication d'une purée déshydratée instantanée de légumineuses dont l'amidon conserve sa propriété de digestibilité retardée tout en étant pratiquement totalement digestible, autrement dit totalement assimilable par l'organisme.

Pour mettre en œuvre le présent procédé, on peut partir de toute graine de légumineuse sèche du commerce. On part de préférence de graines sèches de haricots ou de lentilles.

Pour tremper les graines sèches, on utilise de préférence une eau douce présentant une teneur en Ca qui n'excède pas 3 mmole/l. On a constaté que l'enrichissement de l'eau de trempage en chlorure de sodium p. ex. a des effets plutôt défavorables sur la graine de légumineuse dans le cas présent. On peut recommander en particulier d'éviter toute augmentation de pH ou de salinité de l'eau de trempage qui aurait pour effet d'extraire les protéines ou d'affaiblir les parois cellulaires de la graine. On peut utiliser l'eau à raison d'environ 2 à 4 parties en poids pour 1 partie en poids de graines sèches, p. ex.

Par le trempage, on cherche à obtenir un degré maximum de réhydratation, autrement dit une teneur en eau de la graine séchée trempée proche de la teneur en eau de la graine fraîche au maximum de sa croissance. La quantité d'eau qui peut être ainsi absorbée dans les tissus interstitiels de la graine autour des grains d'amidon est suffisante pour permettre une gélatinisation complète des grains lors de la cuisson et assurer de ce fait leur digestibilité maximum. A cet effet, on trempe les graines à une température de 20 à 65 °C durant 0,5 à 24 h.

Si l'on trempe les graines à température ambiante, autrement dit à une température de environ 20-22 °C, ont peut obtenir le résultat recherché en environ 10-24 h. Si l'on trempe durant moins de 10 h, les graines ne peuvent pas devenir assez tendres. Si l'on trempe plus longtemps que 24 h, on augmente inutilement les risques de développement de microbes sans améliorer sensiblement le résultat du trempage.

Si l'on trempe les graines dans une eau chauffée pour accélérer le processus, on préfère éviter de provoquer à ce stade un début de gélatinisation, autrement dit un début d'absorption de l'eau interstitielle par les grains d'amidon eux-mêmes. C'est ainsi que l'on évite de tremper à des températures supérieures à 65 °C. De même, on préfère ne pas prolonger le trempage au-delà du temps nécessaire qui peut n'être p. ex. que d'environ 0,5 à 4 h à des températures d'environ 40 à 65 °C et qui dépend des caractéristiques physiques des graines, notamment de leur rapport surface/volume.

La cuisson des graines de légumineuses a pour but premier de réaliser la gélatinisation complète des grains d'amidon. Lors de cette opération de cuisson, on cherche de préférence dans le cas présent à assurer l'absorption par les grains d'amidon de la seule eau présente dans les tissus interstitiels suite à l'opération du trempage, de manière à éviter un gonflement superflu des grains d'amidon et à ne pas distendre inutilement les parois cellulaires de la graine. C'est ainsi que l'on cuit de préférence les graines à la vapeur saturée à pression atmosphérique. Une cuisson à l'eau est également possible, mais il est difficile d'obtenir ainsi une cuisson homogène des graines sans devoir les maltraiter en les agitant. En cuisant à l'eau, il est également difficile d'éviter que les grains d'amidon gonflent au-delà de ce qui est nécessaire pour obtenir leur gélatinisation complète. Une cuisson à la vapeur sous pression est également possible.

Le temps de cuisson doit être suffisant pour que la graine de légumineuse perde son goût typique de graine crue, la disparition de ce goût coïncidant généralement avec l'obtention de la gélatinisation complète de l'amidon. Mais ce temps peut devoir être prolongé de quelques minutes p. ex. pour obtenir une tendreté de la graine qui permette de la réduire en purée de manière adéquate. C'est ainsi que, selon l'invention, la cuisson à la vapeur saturée à pression atmosphérique dure 40-60 min. Si l'on cuit les graines durant moins de 40 min, on peut ne pas obtenir une gélatinisation complète de l'amidon et le goût de cru peut persister. Si l'on cuit les graines durant plus de 60 min, on n'obtient pas d'augmentation sensible de la digestibilité de l'amidon tout en attendrissant la graine au-delà de ce qui est nécessaire et en affaiblissant de ce fait inutilement les parois cellulaires. Ce domaine de 40 à 60 min est valable pour des implantations à des altitudes égales ou relativement proches du niveau de la mer, où la température d'ébullition de l'eau est d'environ 98 à 100 °C. Pour un travail à des altitudes plus élevées, on peut prolonger le temps de cuisson pour compenser la baisse de pression atmosphérique.

Pour réaliser la cuisson à la vapeur, on peut utiliser tout appareil ou dispositif adéquat qui ne maltraite pas les graines, autrement dit que ne leur fait pas subir de contraintes mécaniques. On peut utiliser p. ex. un blancheur à tapis à vapeur directe et y disposer les graines en une couche relativement mince pour éviter les hétérogénéités de cuisson. Avant de réduire les graines cuites en purée et même durant la cuisson, il peut être avantageux de prévoir que les graines puissent s'égoutter de manière qu'elles ne stagnent pas dans l'eau de condensation de la vapeur de cuisson.

Pour réduire les graines cuites en purée, on utilise un presse-purée formé d'une grille ou plaque percée d'ouvertures au travers de laquelle on presse la matière à réduire en purée, en ayant soin de conférer aux ouvertures une dimension suffisante et d'exercer sur les graines un minimum de contraintes pour les faire passer au travers.

C'est ainsi que dans une forme de réalisation préférée de l'opération de réduction des graines cuites en purée, on les presse de manière qu'elles passent à une vitesse de 2-20 cm/s au travers d'un presse-purée formé d'une plaque présentant des ouvertures dont la plus petite dimension est comprise entre la plus petite dimension moyenne et la plus grande dimension moyenne des graines trempées. Si l'on doit réduire en purée p. ex. des lentilles cuites dont le diamètre moyen est de 5-6 mm et l'épaisseur moyenne de 2-3 mm, on peut les faire passer au travers d'une plaque présentant des ouvertures rondes de 3-5 mm de diamètre. Si l'on choisit des ouvertures plus petites, on maltraite inutilement les graines. Si l'on choisit des ouvertures plus grandes, on ne réduit plus aussi bien les graines en purée. De même, si l'on presse les graines cuites de manière qu'elles passent au travers des ouvertures à une vitesse plus grande que 20 cm/s, on les maltraite en exerçant sur elles des contraintes trop fortes et en particulier des effets de cisaillement qui endommagent les parois cellulaires. Si l'on presse les graines cuites de manière qu'elles passent au travers des ouvertures à une vitesse inférieure à 2 cm/s, on obtient peut-être encore la réduction en purée, mais on ralentit inutilement le débit sans en tirer d'avantage sensible. Pour presser les graines au travers des ouvertures on peut utiliser une vis de transport adéquate à pas relativement large tournant relativement lentement ou un piston p. ex. A l'inverse, on peut aussi faire pénétrer la plaque à ouvertures au travers des graines immobiles p. ex.

La technologie du séchage sur cylindre qui n'endommage pas les parois cellulaires et conserve les qualités de digestibilité retardée de l'amidon, est utilisée pour la mise en œuvre du présent procédé.

On peut obtenir la présente purée séchée sous forme de flocons en séchant la purée sur cylindre, en détachant un film de purée déshydratée du cylindre et en réduisant le film en flocons. Avec cette technologie, on peut vaporiser rapidement l'humidité de la purée alors qu'elle se trouve sous forme de couche très mince, ce qui permet d'obtenir un film lâche formé de granules juxtaposés et accolés, composés chacun de quelques cellules individuelles pratiquement intactes. Ce film peut être cassé et réduit en flocons sans qu'un nombre trop grand de parois cellulaires soient endommagées, dans la mesure où les flocons conservent des dimensions relativement importantes.

Pour sécher la purée sur cylindre, on peut utiliser un séchoir à deux cylindres de même diamètre ou un séchoir à un cylindre muni d'au moins un satellite. On peut chauffer le ou les cylindres avec de la vapeur à 2-8 bars, de préférence saturée, régler l'interstice entre les cylindres ou entre le cylindre et le satellite à environ 3-6 mm, charger et répartir la purée sur le cylindre en amont de l'interstice, faire tourner le cylindre à une vitesse telle que le temps de séjour de la purée sur le cylindre soit de environ 8-25 s et détacher le film sec ainsi formé sur le cylindre avec un racloir appliqué contre le cylindre. Dans le cas où l'on utilise un séchoir à un cylindre muni de plusieurs satellites, l'alimentation ou chargement des satellites peut se faire en cascade par raclages successifs ou individuellement avec de la purée fraîche.

Si l'on chauffe le cylindre avec de la vapeur à plus de 8 bars ou que l'on laisse séjourner la purée plus de 25 s sur le cylindre, on risque de ne pas former de film cohérent sur le cylindre et de maltraiter tous les granules individuels qui viennent percuter le racloir. Si l'on chauffe le cylindre avec de la vapeur à moins de 2 bars ou que l'on laisse séjourner la purée moins de 8 s sur le cylindre, on ne parvient pas à sécher suffisamment le film.

Afin d'éviter le risque de formation d'une poudre au lieu d'un film cohérent, au cas notamment où l'on désire augmenter la quantité de purée séchée par h en chauffant le cylindre avec de la vapeur à pression relativement élevée de 4 à 8 bars, on peut abaisser la température de surface du cylindre p. ex. à 110-115 °C. Pour ce faire, on peut pulvériser de l'eau, de préférence déminéralisée, sur le cylindre en amont d'une zone de répartition de la purée sur le cylindre. On peut pulvériser l'eau de manière qu'une zone d'ébullition apparaissant sur le cylindre s'étende jusqu'au bord de la zone de répartition de la purée sur le cylindre. On peut de la sorte augmenter en toute sécurité la quantité de purée séchée par h dans une proportion allant jusqu'à 70-90 % par rapport aux quantités obtenues en chauffant le cylindre avec de la vapeur à pression relativement basse de 2-4 bars.

De préférence, on sèche la purée jusqu'à une humidité résiduelle de environ 3-8 %. Si l'on sèche jusqu'à une humidité résiduelle inférieure à 3 %, on court le risque que le produit rancisse au stockage. Si l'on sèche jusqu'à une humidité résiduelle supérieure à 8 %, on court le risque que le produit brunisse et prenne un goût sucré au stockage par suite d'une réaction de Maillard.

Le film séché sur cylindre présente un poids de environ 0,5 à 1,5 g/dm². On peut alors le réduire en flocons de toute manière apte à ne produire qu'un minimum de fines. Il s'agit en effet de réduire le film en flocons de dimensions appréciables et non de le réduire en poudre. On le réduit de préférence en flocons présentant une surface d'au moins 4 mm². Pour ce faire, on peut p. ex. presser le film à l'aide d'une brosse tournante au travers d'un tamis dont les mailles présentent une surface ouverte d'au moins 4 mm².

Pour reconstituer la purée déshydratée instantanée selon la présente invention, on peut verser p. ex. deux à trois parties d'eau chaude sur une partie de purée déshydratée, selon la consistance que l'on désire obtenir, et brasser légèrement. On peut utiliser une eau à environ 80-100 °C, mais on préfère utiliser un eau dont la température soit dans le bas de ce domaine. Si l'on attend quelques minutes avant de consommer la purée reconstituée, mais au maximum environ 5 min, on peut encore améliorer ses qualités organoleptiques, notamment son onctuosité. Mais si l'on attend et que l'on laisse refroidir plus longtemps, la purée reconstituée perd une partie de ses qualités organoleptiques en s'épaississant.

La purée selon la présente invention représente un aliment d'un intérêt diététique, nutritionnel et organoleptique certain pour les consommateurs en général. Par sa digestibilité retardée, autrement dit par sa résorption intestinale retardée, la présente purée a le grand avantage physiologique d'assurer l'apport énergétique désiré tout en maintenant une glycémie et une insulinémie stables. La présente purée contribue ainsi à prolonger la sensation de satiété et à prévenir les écarts ou les excès de régime. Son emploi est donc particulièrement indiqué pour l'alimentation des consommateurs qui désirent contrôler leur appétit et leur prise de poids, ainsi que pour les malades obèses et/ou diabétiques soumis à des diètes strictes.

Les exemples ci-après présentent à titre d'illustration quelques modes de réalisation de la purée déshydratée instantanée selon la présente invention et de son procédé de fabrication. Ils sont précédés d'une présentation des tests réalisés pour déterminer l'index de digestion et l'index glycémique, ainsi que de quelques exemples comparatifs illustrant d'une part les qualités de digestibilité de l'amidon de graines de légumineuses préparées et cuites de diverses manières et d'autre part la corrélation entre l'index de digestion et l'index glycémique. Ils sont suivis d'exemples d'applications comparatifs illustrant les effets de l'ingestion de la présente purée sur la glycémie et l'insulinémie d'individus bien portant ou diabétiques.

Dans tous ces exemples, les pourcentages et parties sont donnés en poids, sauf indication contraire.

## Index de digestion

### a) Réactifs

— tampon phosphate à 20 mmoles/l et pH 7 contenant 32 mg $MgSO_4 \cdot 7H_2O/l$ et 70 mg $CaCl_2 \cdot 2H_2O/l$
— trypsine présentant une activité de 3000 NF par mg
— pancréatine présentant une activité de 4 NF par mg dissoute à raison de 30 mg dans 10 ml de tampon
— réactif de Nelson-Somogyi pour les sucres réducteurs (exprimés comme maltose)
— amidon soluble

### b) Préparation des échantillons pour le test de digestion

#### b.1. Purée

On introduit dans une éprouvette à fermeture étanche un poids de purée déshydratée instantanée équivalant à 700 mg d'amidon exprimé comme glucose. On ajoute 20 ml de tampon et l'on chauffe 10 min à 100 °C.

#### b.2. Farine de légumineuses, pour comparaison

On moud en farine des graines de légumineuses sèches. On introduit dans une éprouvette à fermeture étanche un poids de farine équivalant à 700 mg d'amidon exprimé comme glucose. On ajoute 20 ml de tampon et l'on chauffe durant 15 min à 115-120 °C.

#### b.3. Graines de légumineuses, pour comparaison

On prend une quantité de graines de légumineuses sèches entières équivalant à 7 g d'amidon exprimé comme glucose. On trempe les graines dans 200 ml de tampon durant 12 h à 20 °C ou durant 4 h à 40 °C. On chauffe durant 15 min à 115-120 °C. On réduit les graines en purée en les broyant doucement. On prélève 10 % de la purée et on les introduit dans une éprouvette à fermeture étanche.

#### b.4. Amidon soluble, pour étalonnage.

On introduit dans une éprouvette à fermeture étanche un poids d'amidon soluble équivalant à 700 mg d'amidon exprimé comme glucose.

5

c) Conditions du test

On ajoute 5 mg de trypsine et 0,15 ml de solution de pancréatine dans l'éprouvette chauffée à 37 °C et l'on mélange bien. On mélange bien à nouveau toutes les 10 min. Après 60 min à 37 °C, on centrifuge et l'on recueille 0,5 ml de solution que l'on dilue dans 25 ml d'eau distillée. On prélève 1 ml de la solution diluée et l'on détermine la teneur en équivalent maltose.

d) Définition de l'index de digestion

L'index de digestion est défini comme étant le pourcentage d'équivalent maltose formé au cours du test par rapport à l'amidon initial de l'échantillon exprimé comme glucose, divisé par le pourcentage d'équivalent maltose obtenu de cette manière pour l'amidon soluble, et multiplié par cent.

L'index de digestion est donc étalonné par rapport à l'amidon soluble dont l'index de digestion prend la valeur 100 par cette définition.

On peut noter qu'il se forme environ 40 % d'équivalent maltose au cours du test fait sur l'échantillon d'amidon soluble, par rapport à l'amidon soluble initial exprimé comme glucose.

### Comparaison des index de digestion de différents échantillons

A.1. On prépare des échantillons de farine de graines sèches de haricots blancs (Phaseolus vulgaris) et de lentilles brunes (Lens esculenta). On cuit les échantillons de farine de graines durant 15 min à 115-120 °C de la manière décrite sous lettre b.2. ci-dessus.

A.2. On moud en farine des flocons de haricots blancs obtenus de la manière décrite à l'exemple 1 ci-après. On cuit un échantillon de cette farine de flocons durant 10 min à 100 °C de la manière décrite sous lettre b.1. ci-dessus.

B.1. On prépare des échantillons de graines entières sèches de haricots blancs et de lentilles brunes. On trempe les échantillons de graines entièrement durant 4 h à 40 °C et on les cuit durant 15 min à 115-120 °C de la manière décrite sous lettre b.3 ci-dessus.

B.2. On prélève un échantillon de flocons de haricots blancs obtenus de la manière décirte à l'exemple 1 ci-après. On cuit l'échantillon de flocons durant 10 min à 100 °C de la manière décrite sous lettre b.1. ci-dessus.

C. On détermine l'index de digestion de tous ces échantillons de la manière décrite sous lettre c) et d) ci-dessus. Les index ainsi déterminés sont présentés ci-après sous forme de tableau.

|  | 1 | | 2 |
|---|---|---|---|
|  | lentilles brunes | haricots blancs | flocons de haricots blancs |
| A, mouture puis cuisson | 67 | 85 | 59 |
| B, cuisson sans mou-ture | 22 | 22 | 17 |

Ce tableau illustre clairement la digestibilité rapide de l'amidon des graines de légumineuses moulues puis cuites qui contraste avec la digestibilité retardée de l'amidon des graines de légumineuses intactes trempées et cuites. On voit que la fabrication de la purée déshydratée instantanée de haricots blancs selon l'exemple 1 permet de conserver entièrement les qualités de digestibilité retardée de l'amidon mais que si l'on moud les flocons, on perd la plus grande partie de ces qualités. Si par cette mouture on ne retrouve pas une digestibilité de l'amidon tout aussi rapide que celle de l'amidon des graines moulues puis cuites, on peut attribuer ce fait à une certaine rétrogradation de l'amylose durant le processus de fabrication de la purée déshydratée instantanée.

### Index glycémique

On donne à ingérer à un individu à jeun une ration de féculent équivalent à 50 g d'amidon. On lui fait des prises de sang 30 min avant l'ingestion (pour contrôle), juste avant l'ingestion puis 30 min, 45 min et 60 min après l'ingestion. On détermine la teneur en glucose de tous les échantillons de sang prélevés. On trace la courbe de la glycémie (ordonnée, mmol/l) de l'individu en fonction du temps (abscisse, h) entre l'instant 0, moment de l'ingestion, et 1 h après.

**0 184 015**

L'index glycémique est défini comme égal à la surface comprise entre cette courbe et l'horizontale passant par la glycémie à l'instant 0. Il est exprimé en mmol/l.h⁻¹.

Corrélation entre l'index de digestion et l'index glycémique

Avec le concours de deux individus bien portants, on détermine de la manière décrite ci-dessus deux séries d'index glycémiques de lentilles brunes cuites entières, de lentilles brunes moulues puis cuites, de flocons de pois jaunes obtenus de manière incorrecte, de flocons de haricots blancs obtenus de la manière décrite aux exemples 1 et 2 et de flocons de haricots blancs obtenus de manière incorrecte, à savoir après endommagement des graines cuites par malaxage dans une pompe. Les flocons de pois jaunes et de haricots blancs sont reconstitués par addition de 3 parties d'eau à 80 °C pour 1 partie de flocons et ingérés 5 min après. Les flocons selon l'exemple 2 ci-après sont également testés sous forme moulue, la reconstitution s'effectuant comme pour les flocons intacts.

L'index de digestion de chacun des produits est également déterminé selon la procédure décrite plus haut.

Les résultats obtenus sont regroupés dans le tableau ci-après.

| Produit | Index de digestion | Index glycémique (mmol/l·h⁻¹) | |
|---|---|---|---|
| | | individu No. 1 | individu No. 2 |
| flocons haricots blancs selon Ex. 1 | 17 | 0,36 | 0,57 |
| lentilles brunes entières | 22 | 0,42 | 0,30 |
| flocons haricots blancs selon Ex. 2 | 23 | 0,38 | 0,18 |
| flocons ratés haricots blancs | 30 | 0,68 | 0,71 |
| flocons ratés pois jaunes | 39 | 0,71 | 0,81 |
| flocons haricots blancs selon Ex. No. 2 moulus | 60 | 1,08 | 1,12 |
| lentilles brunes moulues | 67 | 1,40 | 1,24 |

On constate donc une corrélation très nette entre les deux index. Cette corrélation justifie la caractérisation des qualités de digestibilité retardée de la purée déshydratée instantanée selon la présente invention au moyen du seul index de digestion.

A partir de valeurs de l'index de digestion d'environ 30, on peut même prédire l'index glycémique avec une certaine précision. Pour des valeurs de l'index de digestion d'environ 15 à 30 une prédiction de l'index glycémique n'a guère de sens, si ce n'est de manière très globale, parce que la glycémie correspondante est très proche de la glycémie de l'individu à jeun et donc soumise aux mêmes fluctuations.

Exemple 1

On trempe des graines de haricots blancs (Phaseolus vulgaris) sèches durant 15 h à 20 °C dans de l'eau du robinet présentant une teneur en Ca de 2 mmole/l, à raison d'une partie de graines pour 3 parties d'eau. Les graines reprennent durant ce trempage environ 100 % d'eau par rapport à leur poids avant trempage.

On dispose les graines sur un blancheur à tapis en une couche de environ 8 cm d'épaisseur et on les

7

cuit à la vapeur saturée à pression atmosphérique durant 50 min. On égoutte les graines. Elles présentent alors une teneur en matière sèche de environ 45 %, une longueur moyenne de environ 16 mm, une largeur moyenne de environ 9 mm et une épaisseur moyenne de environ 5 mm.

A l'aide d'une vis de transport présentant un pas de 10 cm et un diamètre de 15 cm, on presse les graines cuites au travers d'une plaque de même diamètre présentant des ouvertures oblongues de 8 mm de large et 90 mm de long. La somme des surfaces des ouvertures représente environ le 40 % de la surface de la plaque. La vis tourne à environ 60 tours/min. La vitesse moyenne des graines dans la vis est inférieure à la vitesse théorique de 10 cm/s par suite de glissements des graines sur elles-mêmes et contre la paroi de la vis. Les graines passent à travers les ouvertures de la plaque à une vitesse moyenne d'environ 15 cm/s.

On sèche la purée sur un séchoir à cylindre de 50 cm de diamètre et 50 cm de long équipé de 4 satellites de 9,6 cm de diamètre. Le premier satellite est placé légèrement en aval par rapport au plan vertical passant par l'axe du cylindre. L'interstice entre les satellites et le cylindre est ajusté à 4 mm. Le cylindre est chauffé à la vapeur à 2,5 bars et tourne à 3 tours/min.

On charge et répartit donc la purée régulièrement sur toute la largeur du cylindre en amont du premier satellite. On alimente les satellites en cascade par raclages successifs. La purée séjourne 15 s sur le cylindre avant d'être détachée sous forme d'un film sec par un racloir appuyé contre le cylindre en aval du quatrième satellite. Le film présente une humidité résiduelle de 5 %.

On réduit le film en flocons dans un tamis à mailles présentant une ouverture de environ 16 mm² au travers desquelles il est contraint de passer sous l'effet d'une légère pression exercée par une brosse rotative. On obtient des flocons présentant une surface de environ 16 mm², une couleur blanc crème, une densité apparente d'environ 0,4 kg/l et un index de digestion de 17.

Pour reconstituer la purée, on verse deux à trois parties d'eau à 80 °C sur une partie de flocons, selon la consistance que l'on veut obtenir. Avec trois parties d'eau on obtient la consistance d'une purée fluide. Avec deux parties d'eau on obtient la consistance d'une purée épaisse. La purée reconstituée présente un goût agréable et neutre. On n'y reconnaît en particulier aucune astringence. Sa texture est également agréable dans la bouche et rappelle celle d'un gruau de céréale bien apprêté lorsqu'on l'écrase entre la langue et le palais.

## Exemples 2-6

On prépare des purées déshydratées instantanées de graines de diverses légumineuses sous forme de flocons de manière semblable à celle décrite à l'exemple 1 mais en variant et en adaptant certaines conditions.

Les exemples 2 et 3 sont aussi réalisés avec des graines de haricots blancs. Les exemples 4 à 6 sont réalisés chacun avec des graines d'une autre variété ou espèce de légumineuse, à savoir respectivement des lentilles brunes (Lens esculenta), des haricots chevriers (Phaseolus vulgaris) et des haricots rouges (Phaseolus vulgaris).

Les lentilles présentent après cuisson un diamètre moyen de environ 5-6 mm et une épaisseur moyenne de environ 2-3 mm. Pour les réduire en purée, on les fait passer au travers d'une plaque présentant des ouvertures rondes de 5 mm de diamètre, la somme des ouvertures représentant environ le 40 % de la surface de la plaque.

Les graines de haricots chevriers et de haricots rouges présentent après cuisson une longueur moyenne d'environ 14 mm, une largeur moyenne d'environ 8 mm et une épaisseur moyenne d'environ 5 mm. Pour les réduire en purée on les fait passer au travers de la même plaque que celle décrite à l'exemple 1.

Les autres conditions variées, les teneurs en matière sèche intermédiaires des graines et l'index de digestion des flocons obtenus sont réunis dans le tableau ci-après où l'on a indiqué aussi les valeurs correspondantes de l'exemple 1 pour faciliter la comparaison.

# 0 184 015

| Légumineuse | haricot blanc | | | lentille brune | haricot chevrier | haricot rouge |
|---|---|---|---|---|---|---|
| Exemple No. | 1 | 2 | 3 | 4 | 5 | 6 |
| Temps de trempage (dans 3 parties d'eau à 20°C) (h) | 15 | 17 | 17 | 17 | 17 | 17 |
| Dureté de l'eau (mmol Ca/l) | 2 | 3 | 0 | 3 | 3 | 3 |
| Matière sèche après trempage (%) | 45 | 44,6 | 44 | 41,2 | 42,8 | non déterminé |
| Type de cuisson | vapeur | eau | vapeur | vapeur | vapeur | vapeur |
| Temps de cuisson (min) | 50 | 45 | 60 | 50 | 50 | 50 |
| Matière sèche après cuisson (%) | 45 | 36,09 | 44,6 | 41,9 | 43,9 | 40,8 |
| Pression de la vapeur de chauffage du cylindre (bars) | 2,5 | 3 | 3,5 | 3,5 | 3,5 | 3,5 |
| Temps de séchage (s) | 15 | 12 | 12 | 12 | 12 | 12 |
| Index de digestion | 17 | 23 | 16 | 29 | 16,5 | 14,6 |

Tous les flocons obtenus présentent une humidité résiduelle d'environ 5 %. Leurs couleurs respectives sont caractéristiques des graines de légumineuses de départ, à savoir blanc crème pour les haricots blancs, brun pour les lentilles, vert pour les haricots chevriers et brun-rouge pour les haricots rouges.

Pour reconstituer chaque purée, on verse deux parties d'eau à 80-90 °C sur une partie de flocons. On obtient des purées légères présentant chacune un goût agréable, relativement neutre mais caractéristique des graines de départ respectives, ainsi qu'une texture rappelant celle d'une bouillie de gruau de céréale.

On constate que l'on obtient des index de digestion remarquablement bas avec les flocons de haricots rouges, de haricots chevriers et de haricots blancs. Pour ces derniers, on voit qu'une cuisson à l'eau est moins favorable qu'une cuisson à la vapeur. Enfin, il apparaît qu'avec les lentilles on obtient un index moins favorable qu'avec les haricots, quoiqu'on puisse le considérer encore comme satisfaisant.

Exemples d'applications comparatifs

(i) Ingestion par des individus bien portants

On prépare des rations d'aliments à base des flocons de haricots blancs obtenus à l'exemple 1 présentant un index de digestion de 17, d'une part, et à base de flocons de pommes de terre présentant les index de digestion de 90, d'autre part. Les flocons de pommes de terre sont supplémentés en fibres et protéines de haricots blancs de manière que leur composition globale soit à peut près égale à celle des haricots blancs. On prépare chaque ration en dispersant un poids de flocons équivalant à 50 g d'amidon (114 g de flocons de haricots blancs) ainsi que 2 g de sel de cuisine dans 400 ml d'eau bouillante.

On fait ingérer lors de deux tests distincts les deux types de rations à 6 individus bien portants de 20-25 ans, à jeun. L'ingestion a lieu 5 min après la préparation des rations respectives. On fait des prises de

9

sang aux individus 30 min avant l'ingestion, au moment de l'ingestion et de 30 en 30 min jusqu'à 4 h après l'ingestion. On détermine la teneur en glucose et en insuline (IRI) de tous les échantillons prélevés. On soustrait des valeurs obtenues la teneur en glucose et en insuline des échantillons correspondants prélevés au moment de l'ingestion. On trace des courbes des différences ainsi déterminées (Δ glycémie, mmol/l ; Δ insulinémie, mU/l) en fonction du temps (t,h).

A partir de ces courbes, on détermine d'une part la valeur moyenne des augmentations maximum de la glycémie ($\overline{\Delta max}$ glycémie) et de l'insulinémie ($\overline{\Delta max}$ insulinémie) pour les 6 individus suite à l'ingestion des deux types de rations.

On détermine d'autre part la valeur moyenne des surfaces ($\overline{F}$) comprises entre les courbes et les horizontales passant par l'origine pour la première heure (0-1 h), les deux premières heures (0-2 h) et les troisième et quatrième heure (2-4) après l'ingestion. Les surfaces pour la première heure correspondent à l'index glycémique tel que défini plus haut.

On détermine enfin l'écart type moyen (±) ainsi que le degré de signification des différences observées entre les valeurs obtenues suite à l'ingestion des deux types de rations. On exprime ce degré de signification en % en soustrayant de 1 la probabilité p de non signification (déterminée par le test par paires de Student) et en multipliant par cent.

Les résultats obtenus sont réunis dans le tableau ci-après.

| | | | Type de rations | | |
| | | | Flocons de pommes de terre | flocons de haricots blancs | Degré de significa-tion(%) |
|---|---|---|---|---|---|
| Δ glycémie | | $\overline{\Delta max}$ (mmol/l) | 2,3 ± 0,4 | 1,2 ± 0,25 | 95 |
| | $\overline{F}$ (mmol/l·h$^{-1}$) | 0-1 h | 1,4 ± 0,28 | 0,5 ± 0,11 | 98 |
| | | 0-2 h | 2,1 ± 0,63 | 1,1 ± 0,30 | 98 |
| | | 2-4 h | 0,1 ± 0,02 | 1,0 ± 0,30 | 98 |
| Δ insulinémie | | $\overline{\Delta max}$ (mU/l) | 52 ± 15 | 20 ± 4,4 | 95 |
| | $\overline{F}$ (mU/l·h$^{-1}$) | 0-1 h | 31 ± 6,2 | 8 ± 2,3 | 99 |
| | | 0-2 h | 53 ± 11,4 | 24 ± 2,9 | 98 |
| | | 2-4 h | 7 ± 2,0 | 24 ± 7 | 95 |

On constate qu'après l'ingestion des rations de flocons de pommes de terre, la glycémie et l'insulinémie d'individus bien portants augmentent rapidement pour atteindre leurs valeurs maximum durant la première heure, puis qu'elles retrouvent leurs valeurs initiales après la deuxième heure. On constate au contraire qu'après l'ingestion des rations des présents flocons de haricots blancs, la glycémie et l'insulinémie des mêmes individus bien portants atteignent des valeurs maximum nettement inférieures et qu'elles ne retrouvent pas encore leurs valeurs initiales après 4 h.

(ii) Ingestion par des individus diabétiques

On prépare d'une part des rations de flocons de haricots blancs équivalant à 50 g d'amidon de la manière décrite sous lettre (i) ci-dessus. On prépare d'autre part des rations de 100 g de glucose dissous dans 300 ml d'eau.

On fait ingérer lors de deux tests distincts les deux types de rations à 4 individus (No. 1, 2, 3, 4) souffrant de diabète indépendant de l'insuline. On détermine la glycémie et l'insulinémie des individus à différents moments (Δ t), à savoir 30 min avant l'ingestion, au moment de l'ingestion et de 30 en 30 min jusqu'à 3 h après l'ingestion. On soustrait des valeurs ainsi obtenues leurs valeurs respectives de la glycémie et de l'insulinémie au moment de l'ingestion. Les différences ainsi déterminées (Δ glycémie, Δ insulinémie) sont réunies dans le tableau ci-après.

| type de rations | Δ t (h) | Δ glycémie (mmol/l) individu No. | | | | Δ insulinémie (mU/l) individu No. | | | |
|---|---|---|---|---|---|---|---|---|---|
| | | 1 | 2 | 3 | 4 | 1 | 2 | 3 | 4 |
| glucose | -0,5 | 0,0 | 0,0 | -2,5 | 1,0 | 0 | 6 | 1 | 8 |
| | 0 | 0,0 | 0,0 | 0,0 | 0,0 | 0 | 0 | 0 | 0 |
| | 0,5 | 4,3 | 0,9 | -0,4 | 4,2 | 17 | 57 | 1 | 31 |
| | 1 | 7,2 | 4,2 | 3,3 | 9,0 | 27 | 104 | 2 | 28 |
| | 1,5 | 8,6 | 5,3 | 3,8 | 11,9 | 29 | 123 | 2 | 28 |
| | 2 | 9,7 | 5,1 | 5,2 | 8,3 | 34 | 144 | 3 | 38 |
| | 2,5 | 8,0 | 4,3 | 4,6 | 8,3 | 26 | 144 | 2 | 42 |
| | 3 | 3,3 | 3,9 | 5,3 | 9,2 | 20 | 108 | 3 | 37 |
| flocons de haricots blancs | -0,5 | 0,0 | 0,0 | 0,0 | 0,0 | 1 | 11 | 0 | 4 |
| | 0 | 0,0 | 0,0 | 0,0 | 0,0 | 0 | 0 | 0 | 0 |
| | 0,5 | 0,0 | 0,0 | 0,9 | -0,3 | 3 | 4 | 0 | 6 |
| | 1 | 0,9 | 0,4 | 2,0 | -0,1 | 10 | 9 | 0 | 10 |
| | 1,5 | 1,6 | 0,6 | 2,4 | 0,0 | 13 | 10 | 0 | 15 |
| | 2 | 2,1 | 0,4 | 2,7 | 0,2 | 17 | 17 | 1 | 19 |
| | 2,5 | 1,8 | 0,6 | 3,0 | -0,1 | 11 | 30 | 1 | 17 |
| | 3 | 1,2 | 0,5 | 3,0 | -0,2 | 9 | 18 | 0 | 16 |

On constate que, de manière générale, la glycémie et l'insulinémie de ces individus diabétiques atteint une valeur maximum environ 1 à 2 h après l'ingestion des deux types de rations. Ne fait exception que l'insulinémie de l'individu diabétique No. 3 qui reste toujours plate.

Les valeurs maximum atteintes diffèrent considérablement d'un individu diabétique à l'autre. La détermination des valeurs moyennes n'aurait donc pas grand sens. Mais la comparaison des valeurs maximum atteintes par l'insulinémie ou la glycémie d'un même individu suite à l'ingestion des deux types de rations est frappante. On constate ainsi que les valeurs maximum atteintes suite à l'ingestion des rations de glucose sont considérablement plus élevées que les valeurs maximum atteintes suite à l'ingestion des rations des présents haricots blancs, pour chacun des individus diabétiques No. 1, 2 et 4.

**Revendications**

1. Procédé de fabrication d'une purée de légumineuses déshydratée instantanée, caractérisé par le fait que l'on trempe des graines de légumineuses sèches à une température comprise entre 20 et 65 °C durant 0,5-24 h, on les cuit à la vapeur saturée à pression atmosphérique durant 40-60 min, on les réduit en purée au moyen d'un presse-purée, formé d'une grille ou plaque percée d'ouvertures au travers de laquelle on presse la matière à réduire en purée, en ayant soin de conférer aux ouvertures une dimension suffisante et d'exercer sur les graines un minimum de contraintes pour les faire passer au travers, et l'on sèche la purée sur cylindre.

2. Procédé selon la revendication 1, caractérisé par le fait que l'on choisit la légumineuse dans le groupe formé par les haricots et les lentilles.

3. Procédé selon la revendication 1, caractérisé par le fait que l'on trempe les graines à température ambiante durant 10-24 h dans une eau douce présentant une teneur en Ca qui n'excède pas 3 mmole/l.

4. Procédé selon la revendication 1, caractérisé par le fait que l'on égoutte les graines après la cuisson.

5. Procédé selon la revendication 1, caractérisé par le fait que l'on réduit les graines cuites en purée en les pressant de manière qu'elles passent à une vitesse de 2-20 cm/s au travers d'un presse-purée formé d'une plaque présentant des ouvertures dont la plus petite dimension est comprise entre la plus petite dimension moyenne et la plus grande dimension moyenne des graines trempées.

6. Procédé selon la revendication 1, caractérisé par le fait que l'on chauffe le cylindre à la vapeur à 2-8 bar et que l'on fait séjourner la purée sur le cylindre durant 8-25 s.

7. Procédé selon la revendication 1, caractérisé par le fait que l'on chauffe le cylindre à la vapeur à 4-8 bar et que l'on abaisse la température de surface du cylindre à 110-115 °C par pulvérisation d'eau sur le cylindre en amont d'une zone de répartition de la purée sur le cylindre.

8. Procédé selon la revendication 1, caractérisé par le fait que l'on sèche la purée jusqu'à une teneur en humidité résiduelle de 3-8 %.

9. Procédé selon la revendication 1, caractérisé par le fait que l'on réduit le film en flocons présentant une surface d'au moins 4 mm$^2$.

10. Purée de légumineuses déshydratée instantanée susceptible d'être obtenue par le procédé selon la revendication 1, caractérisé par le fait qu'elle présente un index de digestion inférieur à 30.

## Claims

1. A process for producing an instant dehydrated puree of legumes, which comprises soaking dry seeds of legumes at a temperature of from 20 to 65 °C for 0.5 to 24 h, cooking them for 40 to 60 min in saturated steam at atmospheric pressure, reducing them to puree by means of a puree press consisting of a grille or plate formed with holes and openings through which the material to be reduced to puree is pressed, providing the holes are large enough and providing minimum force is applied to the seeds to make them pass through, and drying the puree on a drum.

2. A process as claimed in Claim 1, wherein the legume is selected from the group comprising beans and lentils.

3. A process as claimed in Claim 1, which comprises soaking the seeds for 10 to 24 h at ambient temperature in a soft water having a Ca content not exceeding 3 mmoles/l.

4. A process as claimed in Claim 1, which further comprises draining the seeds after cooking.

5. A process as claimed in Claim 1, which comprises reducing the cooked seeds to puree by pressing them in such a way that they pass at 2 to 20 cm/s through a plate formed with holes or openings of which the smallest dimension is between the smallest mean dimension and the largest mean dimension of the soaked seeds.

6. A process as claimed in Claim 1, wherein the drum is heated with steam under a pressure of 2 to 8 bar and in that the puree is left on the drum for 8 to 25 s.

7. A process as claimed in Claim 1, wherein the drum is heated with steam under a pressure of from 4 to 8 bar and in that the surface temperature of the drum is reduced to 110-115 °C by spraying water onto the drum ahead of the zone in which the puree is distributed over the drum.

8. A process as claimed in Claim 1, wherein the puree is dried to a residual moisture content of from 3 to 8 %.

9. A process as claimed in Claim 1, wherein the film is reduced to flakes having a surface area of at least 4 mm$^2$.

10. An instant dehydrated puree of legumes which may be obtained by the process as claimed in Claim 1, characterized by having a digestion index below 30.

## Patentansprüche

1. Verfahren zur Herstellung eines dehydratisierten Instant-Hülsenfrüchtepürees, dadurch gekennzeichnet, daß man die getrockneten Hülsenfrüchte bei einer zwischen 20 und 65 °C liegenden Temperatur während 0,5 bis 24 Stunden einweicht, daß man sie mit gesättigtem Dampf von Atmosphärendruck während 40 - 60 Minuten kocht, daß man sie mit einer Pürierpresse zu einem Brei zerkleinert, welche Presse aus einem Gitter oder einer von Öffnungen durchsetzten Platte besteht, durch das bzw. die man das zu pürierende Material hindurchpreßt, wobei Sorge getragen wird, den Öffnungen eine ausreichende Größe zu verleihen und auf die Hülsenfrüchtekerne ein Minimum an Belastungen auszuüben, um sie durch das Gitter bzw. die Platte zu pressen, und daß man das Püree auf einem Zylinder trocknet.

2. Verfahren nach Anspruch 1, dadurch gekennzeichnet, daß man die Hülsenfrüchte aus der von Bohnen und Linsen gebildeten Gruppe auswählt.

3. Verfahren nach Anspruch 1, dadurch gekennzeichnet, daß man die Hülsenfrüchte bei Umgebungstemperatur während 10 bis 24 Stunden in einem Süßwasser einweicht, dessen Calciumgehalt nicht größer als 3 mMol/l ist.

4. Verfahren nach Anspruch 1, dadurch gekennzeichnet, daß man die Hülsenfrüchte nach dem Kochen abtropfen läßt.

5. Verfahren nach Anspruch 1, dadurch gekennzeichnet, daß man die gekochten Hülsenfrüchte zu einem Püree zerkleinert, indem man sie derart preßt, daß sie mit einer Geschwindigkeit von 2 - 20 cm/s durch eine Pürierpresse durchtreten, welche von einer Platte gebildet wird, welche ihrerseits Öffnungen aufweist, deren kleinste Abmessung zwischen dem Mittelwert der kleinsten Abmessung und dem Mittelwert der größten Abmessung der eingeweichten Hülsenfrüchte liegt.

6. Verfahren nach Anspruch 1, dadurch gekennzeichnet, daß man den Zylinder mit Dampf von 2 bis 8 bar beheizt, und daß man die Verweilzeit des Pürees auf dem Zylinder auf 8 bis 25 s hält.

7. Verfahren nach Anspruch 1, dadurch gekennzeichnet, daß man den Zylinder mit Dampf von 4 bis 8 bar beheizt, und daß man die Temperatur der Oberfläche des Zylinders durch Wasseraufsprühen auf den Zylinder vor einer Verteilungszone des Pürees auf dem Zylinder auf 110 bis 115 °C absenkt.

8. Verfahren nach Anspruch 1, dadurch gekennzeichnet, daß man das Püree bis auf einen Restfeuchtigkeitsgehalt von 3 bis 8 % trocknet.

9. Verfahren nach Anspruch 1, dadurch gekennzeichnet, daß man den Film zu Flocken mit einer Oberfläche von wenigstens 4 mm² zerkleinert.

10. Nach dem Verfahren gemäß Anspruch 1 erhältliches, dehydratisiertes Instant-Hülsenfrüchtepüree, dadurch gekennzeichnet, daß es einen unter 30 liegenden Verdauungsindex aufweist.